# EUROPEAN PATENT APPLICATION

(11) **EP 1 693 191 A1**
(43) Date of publication of application: **23.08.2006**
(21) Application number: 05112340.4
(22) Date of filing: 16.12.2005
(51) Int. Cl.: B32B 7/12

(54) **Composite flexible transpirable device formed from separate layers of textile material joined together by a layer of adhesive polymer**

(30) Priority: 21.02.2005 IT MI20050084
(71) Applicant: BIOFARMITALIA S.p.A., 20144 Milano (IT)
(72) Inventor: Pinna, Fausto, 20050, LESMO (MI) (IT); Pinna, Marco, 21051 Arcinate (VA) (IT)
(74) Representative: Frignoli, Luigi

(57) **Abstract**

A flexible transpirable composite device formed from two or more layers of textile material (3,9) securely joined together, characterised in that said joining is achieved by a layer of a transpirable adhesive polymer (2) completely free of solvents interposed between two adjacent layers of textile material (3,9), at least one substance having pharmacological or cosmetic activity being advantageously dispersed within the polymer.

## Description

The present invention relates to a composite flexible transpirable device formed from at least two layers of textile material having flexibility and gas and vapour permeability characteristics, between two mutually adjacent layers there being interposed a layer of adhesive polymer which securely joins said two layers of textile material together.

The invention also relates to the method for producing said composite device.

Many articles of clothing, textile products for the most varied uses and accessories or devices of textile type, including those allowing the gradual or controlled release of active pharmaceutical, cosmetic, aromatic, fungicidal or bacteriostatic substances, are produced by joining together two or more layers of textile material to form a composite fabric within which the possible aforestated substances are retained.

In the textile industry two or more layers of textile material are joined together to improve the toughness of the composite fabric compared with that of its constituent layers of textile material, for making articles of clothing (in particular sports articles) by directly cutting the composite fabric, in order to eliminate certain disturbing sewing seams, and to eliminate the use of elastic and the like.

The known systems for joining two or more layers of textile material together are very laborious and costly, and lead to the formation of composite fabrics having flexibility and elasticity substantially less than those of their individual constituent textile material layers, and indeed often having high rigidity and fragility.

In general, if the two textile material layers are at least partly produced with thermoplastic yarns, they are joined together by hot-pressing one material layer onto the other. It has been proposed to interpose a thin layer of thermoplastic material between the two layers of textile material and then to hot-compress the composite fabric obtained in this manner. In all cases, the constituent fibres of the two textile material layers are deformed and lose their original flexibility and elasticity, becoming rigid and compromising the transpirability of the composite fabric obtained from them.

In addition, it has been attempted to use textile materials as carriers for the transmission and release of active cosmetic, chemical, pharmacological and similar products; according to the known art, this effect is obtained by depositing particles of these products onto the surface of the textile fibres so that they become weakly anchored to the fibres, enabling the particles to be released on contact with the human body, which can thus benefit from the application of these active products. The known systems of this type for transmitting and releasing active products present numerous drawbacks, including the difficulty of handling and storing textile articles treated in this manner, the fact that the effectiveness of these treated articles is very low because they lose their cosmetic or similar effectiveness within a very short time after being worn or surface-rubbed, the fact that the active products perish rapidly as, even before being used, they remain exposed to external agents (light, oxidation, mechanical rubbing, etc.), and finally the fact that a textile article which has lost its cosmetic or similar properties cannot be reconditioned, i.e. again treated with fresh active products.

The main object of the present invention is to provide a composite device comprising two or more layers of flexible transpirable textile material, while maintaining the flexibility, elasticity and transpirability characteristics of its constituent textile materials unchanged.

Another object is to provide a flexible transpirable composite device formed from two or more layers of flexible transpirable textile material which are separated from each other by a layer of adhesive polymer which retains the two layers of textile material securely together, the adhesive polymer layer being elastic and transpirable, not visible from the outside of the free surfaces of the composite fabric, and able to resist mechanical stresses and repeated washes effected either manually or mechanically.

A further object is to provide a composite device which is able to retain, in its interior, active products having cosmetic and/or pharmaceutical, aromatic, bacteriostatic, fungicidal or similar characteristics, able to exhibit their function by the effect of body moisture or vapour when the composite fabric comes into contact or into proximity with that region of the human body which is to be treated with the product incorporated in the composite fabric. A further object of the invention is to provide a method enabling a composite device of the aforesaid type to be produced easily, rapidly, economically and in an easily reproducible manner, to maintain production costs low and allow high production.

These objects are attained by a device formed from at least two layers of flexible transpirable textile material securely joined together, characterised in that said joining is achieved by a substantially free of solvents, transpirable or reticular layer of at least one adhesive polymer or copolymer interposed between adjacent layers of said textile material.

Preferably said adhesive polymer is chosen from the group comprising acrylic polymers soluble in solvents or water, vinyl polymers soluble in solvents or water, polyurethane adhesives, natural or synthetic resins, polyacrylates and natural polymers or copolymers, said natural polymers being chosen from the group comprising gums, polyvinyl alcohol, cellulose, carrageen and alginates.

One of the objects of the invention is attained by dispersing in said adhesive polymer at least one active product having cosmetic, pharmaceutical, bacteriostatic, bactericidal, fungicidal, vasoprotective, vasodilatory or lenitive and redness inhibiting characteristics, the bactericidal product being preferably a silver colloid.

The composite device of the invention is produced by a method by which said adhesive polymer is spread onto a surface of a web of resistant material to form thereon a layer having a thickness between 50 and 250 micron, this surface having been previously silicone-, polyethylene- or teflon-coated so that it does not adhere to the adhesive polymer, this web with the layer of adhesive polymer then being passed through a plurality of oven stations having gradually increasing temperatures between ambient temperature and 85°C to substantially completely evaporate the solvents from the adhesive polymer, which hence loses its compactness to assume in this manner the form of a reticule having a plurality of very small holes, after which a first layer of textile material of transpirable type is rested on the free surface of the reticular polymer and is compressed thereon with a pressure between 5 and 8 bar, the non-adhering web is removed from the adjacent surface of the reticular adhesive polymer and a second layer of transpirable textile material is rested on this surface of the adhesive polymer and compressed thereon with a pressure between 5 and 8 bar.

The temperatures to which the web with the adhesive polymer layer spread thereon is heated in successive steps are successively of the order of 35-45°C, 45-60°C, 65-75°C, and 75-85°C.

Preferably the different successive heating steps are to 40°C, 50°C, 70°C and 80°C respectively.

The pressure with which said layers of textile material are pressed onto the transpirable layer of adhesive polymer is between 5 and 8 bar.

It is important to note that with the method of the invention, the two layers of transpirable textile material are brought into contact and fixed together cold (at ambient temperature) by means of the transpirable or reticular layer of adhesive polymer by simply exerting a moderate pressure on them: by virtue of this procedure the constituent fibres of the textile materials undergo no relevant stressing or deformation, to maintain their flexibility and elasticity virtually unaltered, with the textile material layers and the layer of reticular adhesive polymer maintaining their transpirability characteristics unaltered.

It should also be noted that the method for producing the composite device is very simple, fast and easily reproducible, so keeping production costs low and achieving high composite device production.

Fabrics which can be used to form the layers of flexible transpirable textile material can be of woven or non-woven type, formed with cotton microfibres or with cotton or other natural or synthetic yarns.

An active product dispersed in the adhesive polymer is advantageously colloidal silver which forms ionic bonds with the adhesive polymer: the positive silver ions have the known characteristic of attracting and destroying the bacteria enzymes in the presence of moisture (the word "moisture" also comprises the vapour emitted by the human body adjacent to which the composite fabric is worn).

In particular, the silver ions develop a powerful fungicidal action and are hence very effective in treating mycoses, such as candidiasis, a bothersome disease of the female genital system.

If an active product of anti-ageing or anti-stress activity is to be used, the adhesive polymer can be bonded to oligoelements (such as copper, zinc, manganese and gold) complexed with 2-pyrrolidine-5-carboxylic acid. In contrast, to obtain redness inhibition, lenitive or re-acidification activity, an amino acid can be used with a fatty acid, such as capryoyl glycine.

If a mixture of essential oils of vasoprotective and vasodilatory activity is bonded to the adhesive polymer, the composite fabric incorporating these products can be used for the pathology related to imperfect blood circulation through the lower limbs, which is very widespread especially in women.

In order to clarify the understanding of the characteristics of the composite fabric and its production method, some non-limiting embodiments thereof are described in detail with reference to the accompanying drawing, in which:
Figure 1 is a schematic representation on a very enlarged scale of a section of a composite fabric comprising only two layers of textile material;
Figure 2 is a very schematic representation of an apparatus for producing the composite fabric.

### EXAMPLE 1

### Preparation of a composite device with two layers of microfibre fabric

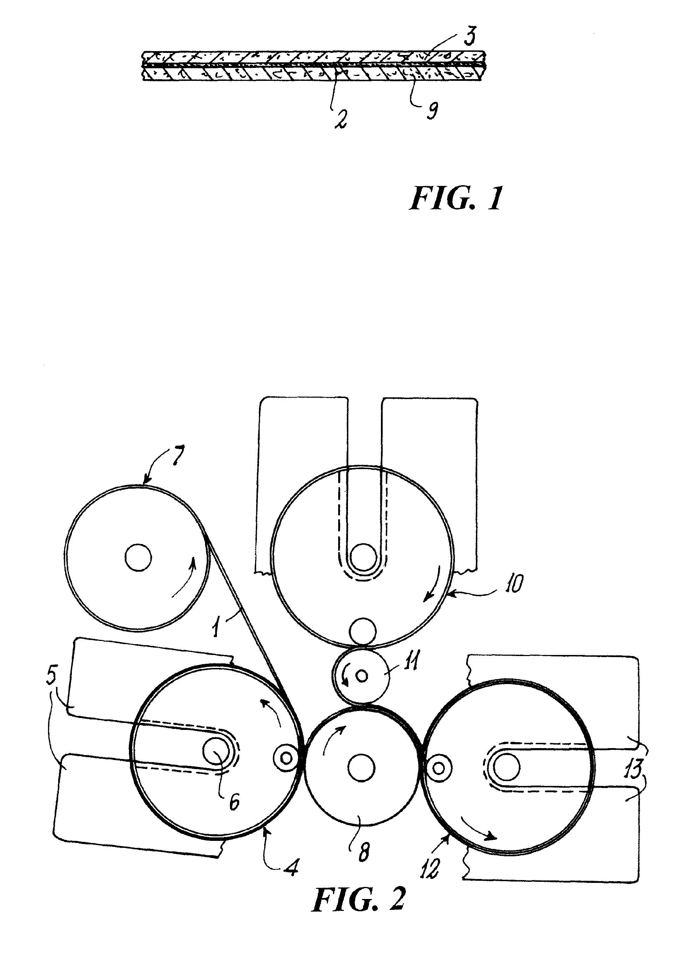

5.74 kg of solvent-soluble acrylic adhesive of non-crosslinked bond type (for example Duro-tak 387-2353 adhesive of the National Starch & Chemical Co.) are fed cold into a container. Using a common spreading machine for patches and with the aid of a compressed air pump, the acrylic adhesive is fed into a doctor blade unit of rotary roller type after adjusting the doctor blade to about 150 micron. The mixture is filmed onto a siliconized polyester web passing at a rate of 7 metres per minute through four successive oven stations in which the temperature is controlled at 40°C, 50°C, 70°C and 80°C respectively. At the oven exit the adhesive forms a layer 2 which is substantially (this term meaning that some p.p.m. parts of solvents may still semain entrapped in the adhesive mass) free of solvents (which have evaporated within the oven stations), the thickness of the adhesive layer being about 14 micron and its density about 15 grams per square metre, its structure non longer being compact but presenting minuscule holes or apertures which give it a reticular form rendering the layer porous and transpirable. The polyester web 1 with the adhesive layer 2 obtained in this manner is joined at 20°C (by exerting on it a pressure of 6 bar) to a microfibre fabric 3 (of the type known commercially as Sensitive Plus), having a density of 117 g/m² and a composition of 72% polyamide and 28% elastam, which is then wound to form a bobbin 4. In this manner the adhesive layer 2 strongly grips the microfibre fabric layer 3, to form an adhesive fabric protected by the web 1 of siliconized polyester. The bobbin 4 obtained is then unwound on an apparatus such as that shown schematically in Figure 2. The bobbin 4 is mounted on a support structure 5 for rotatably supporting the shaft of this bobbin. The web 1 is removed by winding it onto a motorized bobbin 7, then the fabric freed of the siliconized web is transferred about a motorized roller 8 and is joined to a layer of fabric 9 (Figure 1) unwound from a bobbin 10. This fabric layer 9 is unwound about a roller 11 which transfers it and compresses it (with a pressure of 6 bar) onto the adhesive layer 2 which lies on the outer surface of the fabric layer 3 resting on the surface of the roller 8. The combination of the fabrics 3 and 9 with the intermediate layer of permeable adhesive polymer 2 (Figure 1) is then wound onto a motorized bobbin 12, the shaft of which rotates on a rigid structure 13. In this manner a composite device (Figure 1) is obtained not dissimilar in terms of elasticity, transpirability and manageability to that of the individual uncombined fabrics 3 and 9. The bobbin 12 is then packaged and fed to further processing. The density of the combined device is 249 g/m². This combined device, when washed to check its resistance, remained intact, and maintained its characteristics unaltered for up to 20 washes and spins (carried out at 35°C with a washing machine) with 40 minutes for each wash.

### EXAMPLE 2

### Preparation of a composite device with two layers of textile material joined together by an adhesive polymer in which colloidal silver is dispersed

4.5 kg of solvent-soluble adhesive acrylic polymer of non-crosslinked bond type with an average viscosity of 2500/3000 mPa (for example Duro-tak 387-2352 adhesive of the National Starch & Chemical Co.) and 1.240 kg of solvent-soluble acrylic adhesive of crosslinked bond type with low viscosity (700-800 mPa) are fed cold into a container; they are mixed slowly for 20 minutes with a vertical agitator. Separately, 350 g of demineralized water and 60 g of colloidal silver powder are fed into another mixer heated to 30°C. The mixer is rotated at medium speed for 30 minutes and the mass obtained is discharged into another container and left standing for 60 minutes. Colloidal silver is obtained in this manner and is poured thread-like under slow agitation into the adhesive polymer container and maintained under agitation for about 60 minutes until a uniform mass is obtained. It is left standing to expel any air bubbles. Using a spreading machine for patches and with the aid of a compressed air pump, the adhesive acrylic polymer is fed into the doctor blade unit of rotary roller type after adjusting the doctor blade to about 150 micron. The mixture is filmed onto a siliconized polyester web 1 passing at a rate of 7 metres/minute through four oven stations in which the temperature is controlled at 40°C, 50°C, 70°C and 80°C respectively. At the oven exit a layer 2 of transpirable adhesive polymer forms substantially free of solvents (which have evaporated within the oven stations), the thickness of the adhesive layer being about 14 micron and its density about 15 g/m². The polyester web on which the adhesive film has been spread and dried is joined at 25°C (by compressing them together at 5.5 bar) to a microfibre fabric 3 (of the type known commercially as Sensitive Plus 117 g/m² of composition 72% polyamide and 28% elastam), and then wound to form a bobbin 4 (Figure 2). The result is that the adhesive layer grips the microfibre fabric layer, to form an adhesive fabric protected by the siliconized polyester web.

The bobbin 4 obtained is then unwound on an apparatus such as that shown in Figure 2. The bobbin 4 is mounted on the structure 5, the siliconized web 1 is removed by winding it onto the motorized bobbin 7, then the fabric freed of the siliconized web is passed about the roller 8 and joined, at a pressure of 5.5 bar determined by the roller 8, to a fabric web 9 unwound from a bobbin 10. The composite device formed from the two fabrics (3 and 9 joined together by the layer of transpirable adhesive polymer 2) is then rewound to form the bobbin 12. This composite device has characteristics not dissimilar in terms of elasticity, transpirability and manageability to those of the two uncombined fabric layers 3 and 9. Colloidal silver is present within the composite fabric to the extent of about 400 mg/m², able to exhibit antibacterial activity. The colloidal silver content is verified by atomic absorption. The bobbin 12 is then packaged and fed to further processing. For example, oval devices of 3 cm x 6 cm are formed using a vertically pressed punch. These oval devices are then inserted into a pocket in women's panties so that the activity of the colloidal silver is exhibited at the vaginal orifice. This device was shown by in vivo and in vitro tests to exhibit widespread antibacterial and fungicidal activity, protecting the woman from unpleasant pathologies such as the very widespread candidiasis. The density of the composite fabric was 249 g/m².

### EXAMPLE 3

### Preparation of a composite device with two layers of cotton fabric joined together by an adhesive polymer in which copper, zinc and manganese oligoelements are dispersed

6 kg of a styrene and isopropene based adhesive polymer (for example KRATON D-1161 N of Shell Chemicals), 2 kg of an alpha pinene terpene resin (for example DERCOLYTE A 115 of DRT), 10 kg of toluene and 4 kg of MEK are fed cold into a container and mixed slowly for 20 minutes by a vertical agitator. 500 g of powdered sodium PCA (pyrrolidonecarboxylic acid) complexed with copper, zinc and manganese and diluted with 1000 g of demineralized water are poured in thread-like under slow agitation. Slow mixing is continued until a uniform mass is obtained. It is left standing to expel any air bubbles. Using a spreading machine for patches and with the aid of a compressed air pump, the adhesive polymer is fed into a doctor blade unit of rotary roller type after adjusting the doctor blade thickness to about 90 micron. The mixture is filmed onto a siliconized polyester web 1 which then passes through four oven stations in which the temperature is controlled at 40°C, 50°C, 70°C and 80°C respectively, at a rate of 7 metres/minute. At the oven exit a layer 2 of transpirable adhesive polymer substantially free of solvents (which have evaporated within the oven stations) forms on the siliconized polyester web, the thickness of the adhesive layer being about 14 micron and its density about 15 g/m². The polyester web 1 with the adhesive polymer layer 2 is joined at 18°C (by compressing them together at 7.5 bar) to a cotton fabric (100% cotton, density 98 g/m²), and then wound to form a bobbin 4. By this operation the transpirable adhesive polymer layer securely grips the cotton fabric (without decreasing its transpirability), the adhesive polymer being protected by the siliconized polyester web. The bobbin 4 obtained is then unwound on an apparatus such as that shown in Figure 2. The bobbin 4 is mounted on a structure 5, the web 1 is removed by winding it onto a bobbin 7, then the fabric 3, freed of the siliconized web, is joined to another fabric 9 of the same type (cotton 100%, density 98 g/m²) unwound from a bobbin 10, at a pressure of 7 bar determined by the roller 8. The composite device obtained in this manner is then rewound to form a bobbin 12. This composite device has characteristics not dissimilar in terms of elasticity, transpirability and manageability from those of the two uncombined fabric layers 3 and 9. Complexed sodium PCA is present within the composite fabric to the extent of about 1 g/m², able to exhibit anti-stress and anti-ageing activity when brought into contact with the human skin. The metal ion content is verified by atomic absorption. The bobbin 12 is then packaged and fed to further processing. For example, vests can be produced by known methods for wearing in contact with the skin.

### EXAMPLE 4

### Preparation of a composite device with two layers of microfibre fabric joined together by a transpirable adhesive polymer containing capryoyl glycine.

7.5 kg of a solvent-soluble acrylic adhesive polymer (for example, Duro-tak 387-2054 adhesive of the National Starch & Chemical Co.) are fed cold into a container, a vertical mixer is immersed therein and rotated at medium speed. 400 g of capryoyl glycine previously diluted with 600 g of water are poured in thread-like. Mixing is continued until complete dissolution and uniformity are achieved. Using a common spreading machine for patches and with the aid of a compressed air pump, the acrylic adhesive is fed into the doctor blade unit of rotary roller type after adjusting the doctor blade to about 190 micron. The mixture is filmed onto a siliconized polyester web passing at a rate of 6 metres per minute through four successive oven stations in which the temperature is controlled at 40°C, 50°C, 70°C and 80°C respectively. At the oven exit the adhesive polymer layer is substantially free of solvents (which have evaporated within the oven stations), the thickness of the polymer layer being about 18 micron and its density about 20 g/m². The polyester web 1 on which the adhesive polymer layer 2 has been applied is joined at 22°C (by exerting a pressure of 7.5 bar) to an elasticized polyester viscose fabric 3 (polyester 60%, viscose 10%, elastam 30%) and is then wound into a bobbin 4. The result is that the adhesive polymer 2 grips the fabric 3, to form an adhesive fabric protected by the web 1 of siliconized polyester. The bobbin 4 obtained is then unwound by an apparatus such as that shown in Figure 2. The bobbin 4 is mounted on the structure 5, the web 1 is removed by winding it onto a bobbin 7, then the fabric 3 freed of the siliconized web 1 is joined to the other fabric 9 unwinding from the bobbin 10, with a pressure of 7.5 bar determined by the roller 8. The composite device obtained in this manner is then wound onto the bobbin 12. The composite device has characteristics not dissimilar (in terms of elasticity, transpirability and manageability) to that of the uncombined fabric. The bobbin is then packaged and fed to further processing. The density of the combined fabric is 200 g/m².

Capryoyl glycine is dispersed in the composite device within the transpirable adhesive polymer to the extent of about 2.35 g/m², hence able to exhibit effective acidifying and strong redness inhibiting activity. The bobbin 12 is then packaged and fed to further processing. For example, elasticized cylindrical devices can be obtained by known methods from this composite fabric, for enclosing suffering, irritating or reddened body regions such as legs or arms.

Moreover as capryoyl glycine is strongly active in opposing particularly bothersome pathologies such as haemorrhoids (as is colloidal silver), small shaped devices can be produced for applying inside underpants at the anal orifice.

The composite device according to the present invention (formed by two layers of flexible transpirable textile material joined together by a transpirable layer of adhesive polymer) may be cut into separate device portions which may be either sewn or otherwise fixed directly on a surface of the fabric of an underwear, or may be inserted into a pocket in women's panties. It is also obvious that a traspirable fabric of a vest or of an underware may itself constitute one of the two layers of textile material of the composite device, the other layer being formed by a separate layer of textile material which has the adhesive polymer applied on it and which is pressure joined onto said fabric to form the composite device.

## Claims

1. A flexible transpirable composite device formed from at least two layers of flexible transpirable textile material (3, 9) securely joined together, **characterised in that** said joining is achieved by a substantially free of solvents, transpirable or reticular layer (2) of at least one adhesive polymer and/or copolymer interposed between adjacent layers (3, 9) of said textile material.

2. A composite device as claimed in claim 1, **characterised in that** said adhesive polymer (2) is chosen from the group comprising acrylic polymers soluble in solvents or water, vinyl polymers soluble in solvents or water, polyurethane adhesives, natural or synthetic resins, polyacrylates and natural polymers or copolymers.

3. A composite device as claimed in claim 2, **characterised in that** said natural polymers are chosen from the group comprising gums, polyvinyl alcohol, cellulose, carrageen and alginates.

4. A composite device as claimed in claims from 1 to 3, **characterised in that** at least one active product having cosmetic, pharmaceutical, bacteriostatic, bactericidal, fungicidal, vasoprotective, vasodilatory or lenitive and redness inhibiting characteristics is dispersed in said adhesive polymer (2).

5. A composite device as claimed in claim 4, **characterised in that** said bactericidal product is a silver colloid.

6. A method for producing a composite device in accordance with claims from 1 to 5, **characterised in that** said adhesive polymer (2) is spread onto a surface of a web (1) of resistant material to form thereon a layer (2) having a thickness between 50 and 250 micron, this surface having been previously silicone-, polyethylene- or teflon-coated so that it does not adhere to the adhesive polymer, this web (1) with the layer of adhesive polymer (2) then being passed through a plurality of oven stations having gradually increasing temperatures between ambient temperature and 85°C to substantially evaporate the solvents from the adhesive polymer, which hence loses its compactness to assume in this manner the form of a reticule having a plurality of very small holes, after which a first layer (3) of textile material of transpirable type is rested on the free surface of the reticular polymer (2) and is compressed thereon with a pressure between 5 and 8 bar, the non-adhering web (1) is removed from the adjacent surface of the reticular adhesive polymer (2) and a second layer (9) of transpirable textile material is rested on this surface of the adhesive polymer and compressed thereon with a pressure between 5 and 8 bar.

7. A method as claimed in claim 6, **characterised in that** the temperatures to which the web (1) with the adhesive polymer layer (2) spread thereon is heated in successive steps are successively of the order of 35-45°C, 45-60°C, 65-75°C, and 75-85°C.

8. A method as claimed in claim 7, **characterised in that** the different successive heating steps are to 40°C, 50°C, 70°C and 80°C respectively.

9. A method as claimed in claim 7, **characterised in that** the pressure with which said layers (3, 9) of textile material are pressed onto the transpirable layer (2) of adhesive polymer is between 5 and 8 bar.
